# EUROPÄISCHE PATENTSCHRIFT

(11) **EP 2 554 420 B1**
(45) Veröffentlichungstag und Bekanntmachung des Hinweises auf die Patenterteilung: **14.05.2014**
(21) Anmeldenummer: 12001824.7
(22) Anmeldetag: 17.03.2012
(51) Int. Cl.: B60K 1/04, H01M 2/10

(54) **Elektrisches Antriebsmodul für ein Fahrzeug, insbesondere Nutzfahrzeug**
Electric drive module for a vehicle, in particular a commercial vehicle
Module d'entraînement électrique pour un véhicule, en particulier un véhicule utilitaire

(30) Priorität: 30.07.2011 DE 102011109024
(43) Veröffentlichungstag der Anmeldung: 06.02.2013
(73) Patentinhaber: MAN Truck & Bus AG, 80995 München (DE)
(72) Erfinder: Sigl, Johann, 82266 Inning-Bachern (DE); Gunzert, Urs, 80993 München (DE)

(56) Entgegenhaltungen:
- EP-A1- 1 686 637
- WO-A1-2009/016976
- GB-A- 2 443 272
- JP-A- 2002 067 705

## Beschreibung

Die vorliegende Erfindung betrifft ein elektrisches Antriebsmodul für ein Fahrzeug, insbesondere Nutzfahrzeug, mit Elektro- und/oder Hybridantrieb gemäß dem Oberbegriff des Patentanspruchs 1.

Das gattungsbildende Dokument WO 2009/016976 beschriebt ein solches Modul.

Leistungsfähige Antriebsmodule für Nutzfahrzeuge weisen zumeist Hochvoltbatterien (zum Beispiel Lithium-Ionen-Batteriepakete bzw. Akkus) auf, die zur Vermeidung schädlicher Übertemperaturen gekühlt werden müssen. Allgemein ist es bereits bekannt, zumindest die Batteriepakete in schnell wechselbaren Antriebsmodulen anzuordnen (zum Beispiel als Einschubeinheiten). Aus der US 2009/0236478 A1 ist allgemein ein Traggestell für eine Fahrzeugbatterie bekannt. Das Traggestell ist mit Hakenelemente seitlich an einem Nutzfahrzeug-Längsrahmen einhängbar.

Die speziell für den Hybrid-Antrieb oder den Batterie-Antrieb erforderlichen Komponenten, etwa Hochvoltbatterie, Wechselrichter sowie Wasserkühlsystem für den Wechselrichter und für die Hochvoltbatterie, sind typischerweise als separate Bauteile voneinander unabhängig auf Trägern, die zum Beispiel am Längsrahmen verschraubt sind, untergebracht. Ebenso ist bekannt, die Komponenten einzeln direkt am Längsrahmen des Nutzfahrzeugs zu montieren.

Die Aufgabe der Erfindung besteht darin, ein Antriebsmodul für ein Nutzfahrzeug mit Elektro- und/oder Hybridantrieb bereitzustellen, das hinsichtlich Einsatzmöglichkeiten und Nutzung weiterentwickelt und verbessert ist.

Die Aufgabe ist durch die Merkmale des Patentanspruches 1 gelöst. Bevorzugte Weiterentwicklungen sind in den Unteransprüchen offenbart.

Die Erfindung beruht auf dem Sachverhalt, dass die für den Hybrid- und Elektroantrieb erforderlichen Komponenten erst dann einer Funktionsprüfung unterzogen werden können, wenn sie im Nutzfahrzeug verbaut sind. Vor diesem Hintergrund sind erfindungsgemäß die für den Hybrid- und Elektroantrieb erforderlichen Komponenten bereits vor dem Verbau im Nutzfahrzeug als eine vollständig funktionsfähige Baueinheit extern zusammengebaut, so dass zum Beispiel die obige Funktionsprüfung bereits vor dem Verbau im Nutzfahrzeug vornehmbar ist.

Gemäß dem kennzeichnenden Teil des Anspruchs 1 und zur Fernhaltung schädlicher Schwingungen im Fahrbetrieb ist der Tragrahmen unter Zwischenschaltung gummielastischer Lager am Aufbau angebracht, wodurch das Antriebsmodul und insbesondere die Batteriepakete schwingungsentkoppelt gelagert sind.

Des Weiteren kann das Kühlsystem ein Flüssigkeitssystem mit zumindest einem Luft-Wasser-Wärmetauscher und einem geodätisch hoch liegendem Kühlmittel-Ausgleichsbehälter sein, die an dem Tragrahmen befestigt sind. Die thermostatisch und/oder über ein Steuergerät gesteuerte, elektrische Förderpumpe und gegebenenfalls ein Gebläse werden fremdbestromt, sind also autark testbar.

In vorteilhafter Weiterbildung der Erfindung kann der Tragrahmen käfigartig aus Längs-, Quer- und Vertikalstreben zusammengesetzt sein, an die zumindest ein Batteriepaket, der zumindest eine Kühler, die Kühlmittelleitungen, der Ausgleichsbehälter, die Förderpumpe und die elektrischen Wandler wie Wechselrichter und Gleichstromwandler mit Anschlussschnittstelle angebaut sind. Der käfigartige Tragrahmen ist montagetechnisch gut beherrschbar und bietet eine verwindungssteife Aufnahme für die integrierten Aggregate und Einrichtungen.

Bei einem Nutzfahrzeug kann als besonders bevorzugte Anordnung der Tragrahmen des Antriebsmoduls an einen der Längsträger des Aufbaus des Nutzfahrzeugs seitlich zwischen einer Vorderachse und einer Hinterachse angebaut oder anbaubar sein, woraus eine gute, seitliche Zugänglichkeit einerseits und eine besonders geschützte Anordnung des Antriebsmoduls bei Frontal- oder Heckcrashs des Fahrzeugs gegeben ist.

In einer weiteren Ausgestaltung der Erfindung kann an den Längsträger ein Stützrahmen angebaut oder anbaubar sein, in den der Tragrahmen des Antriebsmoduls einsetzbar ist. Dies schafft einen über beide Rahmenstrukturen gebildeten, doppelten Schutz insbesondere für die Batteriepakete und vereinfacht die Montage oder einen Wechsel des Antriebsmoduls.

Der Stützrahmen kann zur Erzielung einer besonders verwindungssteifen und kostengünstigen Konstruktion im Querschnitt U-förmige Seitenwangen aufweisen, die über mehrere Querholme miteinander fest verbunden sind und die durch Längsholme zu einer zum Längsträger hin und nach oben hin offenen Rahmenstruktur verbunden sind, wobei die dem Längsträger unmittelbar benachbarten Seitenwangen am Längsträger befestigt oder befestigbar sind und der Tragrahmen von oben in den Stützrahmen einsetzbar ist.

Ferner kann zur weiteren Aussteifung des Stützrahmens insbesondere gegen von unten wirkende Kräfte (zum Beispiel Auffahrkräfte) zwischen einen oberen und einem unteren Querholm des Stützrahmens jeweils ein diagonal vom Längsträger nach außen und nach unten geneigter Querholm an den Seitenwangen befestigt sein.

In vorteilhafter, weiterer Ausgestaltung der Erfindung wird zudem vorgeschlagen, dass die Längsholme des Stützrahmens mit mehreren Vertikalholmen zu einen biegesteifen Längsrahmen zusammengesetzt sind, der in Verbindung mit den Querholmen als seitlicher Auffahrschutz für das innerhalb des Stützrahmens befindliche Antriebsmodul mit Tragrahmen dient.

Das Antriebsmodul kann in besonders zweckmäßiger Anordnung der Funktionsteile mit zwei Batteriepaketen im Tragrahmen ausgeführt sein, die übereinander liegen, wobei dazwischen ein Abstand ausgebildet ist, in dem zumindest die Förderpumpe, Kühlmittelleitungen, elektrische Leitungen und Bauteile, etc. positioniert sind. Dabei kann ferner der zumindest eine Kühler des Kühlsystems seitlich außen vom Längsträger des Aufbaus entfernt am Tragrahmen angeordnet und hinter dem als Auffahrschutz dienenden Längsrahmen positioniert sein. Bei zwei verwendeten Batteriepaketen kann zur verbesserten Kühlung je Batteriepaket ein Kühler vorgesehen sein, welche Kühler über getrennte Zuführleitungen und Rücklaufleitungen in die Kühlmittelversorgung mit der Förderpumpe eingeschaltet sind.

Baulich einfach und besonders montagegünstig können die oberen Längsstreben des Tragrahmens über vorstehende Abschnitte unter Zwischenschaltung gummielastischer Lager an den oberen Querholmen des Stützrahmens in einer Vierpunktlagerung aufgehängt sein. Des Weiteren kann der als Auffahrschutz dienende Längsrahmen des Stützrahmens über zusätzlich befestigte, obere und untere Knotenbleche ecksteif mit den Querholmen verbunden sein.

Schließlich kann an den oberen Längsstreben des Tragrahmens und/oder am Längsträger des Aufbaus eine Trittflächen aufweisende und/oder Funktionsteile aufnehmende Arbeitsbühne befestigt sein, die das obere Batteriepaket schützend abdeckt und zugleich einen ergonomisch günstigen Zugangsbereich für Bedienungseinrichtungen des Nutzfahrzeugs bereitstellt.

Ein bevorzugtes Ausführungsbeispiel der Erfindung ist im Folgenden anhand der beigefügten Zeichnung näher erläutert. Es zeigen:
- Fig. 1: als Übersichtsskizze ein Nutzfahrzeug mit einem seitlich an dessen Längsträger befestigten Stützrahmen, in den ein elektrisches, autarkes Antriebsmodul mit einem Tragrahmen einsetzbar ist;
- Fig. 2: den an dem Längsträger befestigten Stützrahmen in raumbildlicher Darstellung, der sich aus Seitenwangen, Querholmen, einem außenliegenden Längsrahmen und Knotenblechen zusammensetzt;
- Fig. 3: den käfigartigen Tragrahmen des Antriebsmoduls aus Längs-, Quer- und Vertikalholmen, einer seitlich nach innen abragenden Haltekonsole und mit eingesetztem, oberen und unteren Batteriepaket;
- Fig. 4: das komplette, in den Stützrahmen einsetzbare Antriebsmodul mit Tragrahmen, Batteriepaketen, elektrischen Wandlern und dem Flüssigkeitskühlsystem;
- Fig. 5: das Antriebsmodul im eingesetztem Zustand in den Stützrahmen und mit aufgesetzter, im Nutzfahrzeug Trittflächen bildender Arbeitsbühne; und
- Fig. 6: einen Abschnittsbereich des Nutzfahrzeugs nach Fig. 1 mit in das Nutzfahrzeug eingebautem Stützrahmen, eingesetztem Antriebsmodul und aufgesetzter Arbeitsbühne.

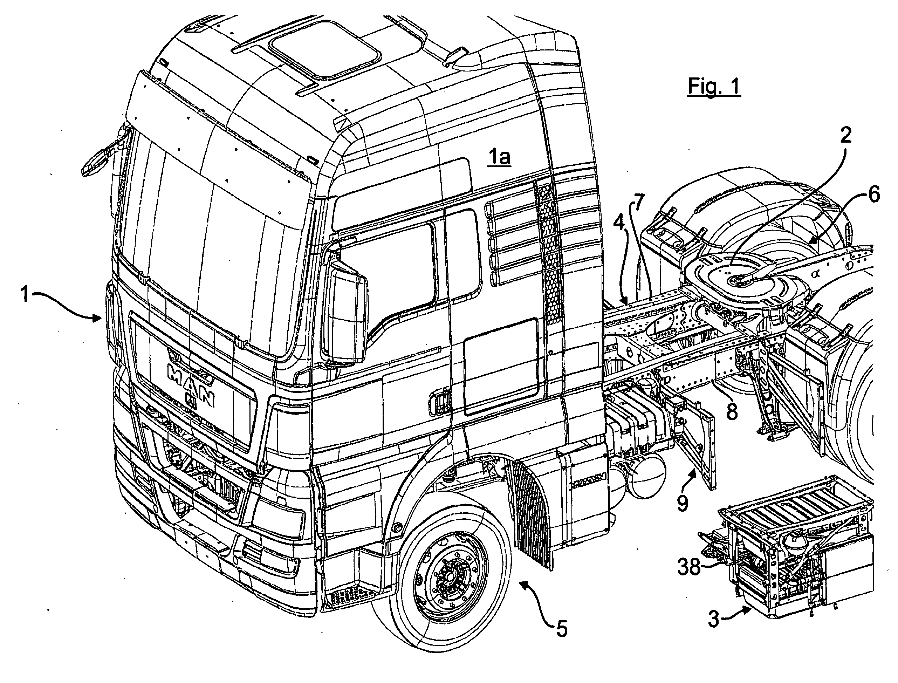

In der Fig. 1 ist schematisch eine Zugmaschine 1 mit Führerhaus 1a und Sattelplatte 2 eines Sattelzuges als Nutzfahrzeug dargestellt, die einen Hybridantrieb aufweist, der sich aus einer Brennkraftmaschine als erster Antriebsquelle und zumindest einer Elektromaschine als zweiter Antriebsquelle zusammensetzt. Die Antriebsaggregate können bekannter Bauart sein und sind deshalb nicht dargestellt.

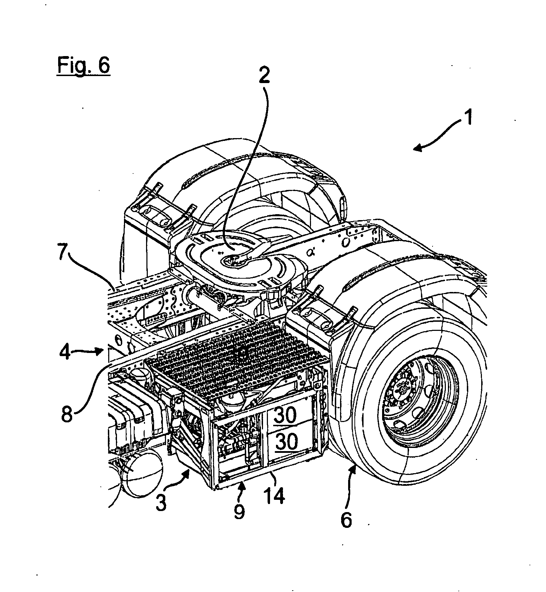

Die Antriebsenergie für die Elektromaschine(n) wird in zumindest einem elektrischen Antriebsmodul 3 gespeichert, das als autarke Einheit seitlich an der Zugmaschine 1 angeordnet ist (siehe Fig. 6; in der Fig. 1 im demontierten Zustand gezeichnet).

Dazu ist am tragenden Aufbau 4 der Zugmaschine 1 zwischen der Vorderachse 5 und der Hinterachse 6 (es sind jeweils nur die Räder ersichtlich) und hinter dem Führerhaus 1a an dem einen (oder an beiden) der zwei massiven Längsträger 7, 8 ein noch zu beschreibender Stützrahmen 9 befestigt, in den das elektrische Antriebsmodul 3 eingehängt ist.

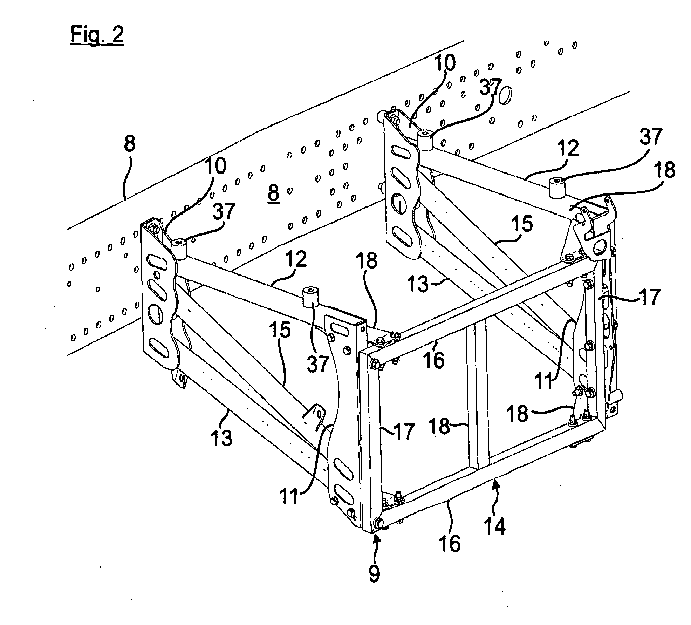

Die Fig. 2 zeigt den am Nutzfahrzeug-Längsträger 8 montierten Stützrahmen 9 im Detail sowie mit weggelassenem Antriebsmodul 3. Der Stützrahmen 9 setzt sich aus, an dessen Ecken befindlichen, U-förmigen Seitenwangen 10, 11, je Querseite zwei Querholmen 12, 13 und einem äußeren Längsrahmen 14 zusammen. Zwischen den Querholmen 12, 13 ist jeweils ein diagonal nach außen unten ausgerichteter Querholm 15 eingesetzt, der insbesondere die Steifigkeit des Stützrahmens 9 in Z-Richtung erhöht.

An den Stirnseiten der äußeren Seitenwangen 11 ist der biegefest ausgeführte Längsrahmen 14 befestigt. Dieser ist aus Längsholmen 16 und Vertikalholmen 17 gefertigt und dient als seitlicher Auffahrschutz im Falle eines Seitencrashs mit einem anderen Fahrzeug oder dergl.

Der Stützrahmen 9 ist mittels der am Längsträger 8 mit ihren Stirnseiten anliegenden Seitenwangen 10 fest mit dem Längsträger 8 verschraubt oder vernietet. Die Verbindungsstellen zwischen den Seitenwangen 10, 11 und den besagten Längs- und Querholmen des Stützrahmens 9 aus Stahl sind teils verschweißt, verschraubt oder vernietet. Der Stützrahmen 9 bildet in Verbindung mit dem Längsträger 8 einen umlaufend geschlossenen Rahmen, der gemäß der Fig. 2 nach unten und nach oben offen ausgeführt ist und zusätzlich an den äußeren Eckbereichen durch obere und untere Knotenbleche 18 ausgesteift ist. Die Knotenbleche 18 können bevorzugt nach dem Einhängen des Antriebsmoduls 3 in den Stützrahmen 3 verschraubt werden.

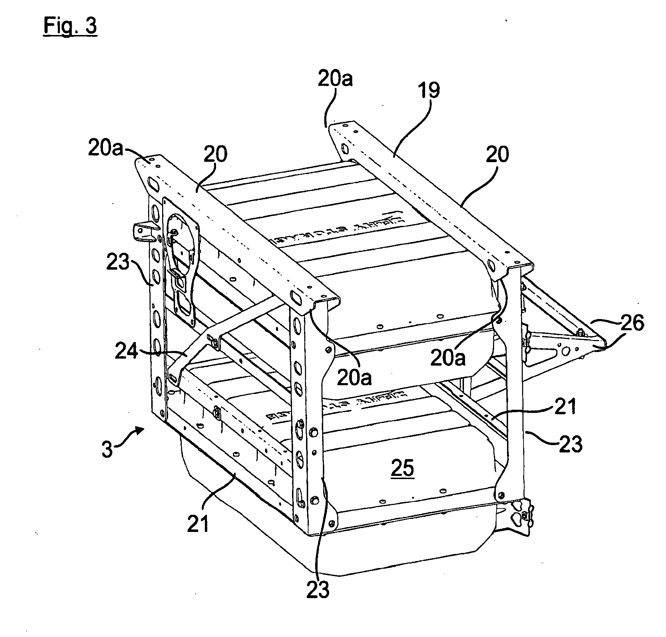

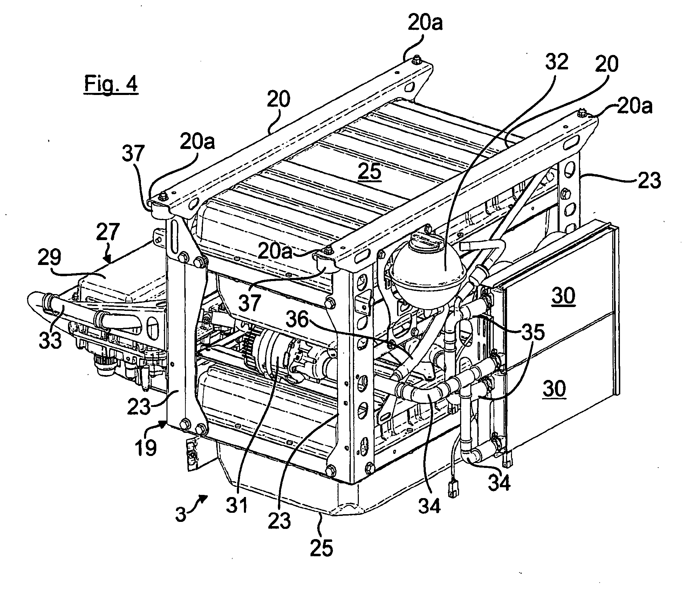

Die Fig. 3 und 4 zeigen das Antriebsmodul 3, das einen käfigartigen, etwa rechteckigen Tragrahmen 19 (vergleiche Fig. 3) aufweist, der sich aus oberen und unteren Längsstreben 20, 21, aus an dessen Ecken angeordneten Vertikalstreben 23 und einerseits einer aussteifenden Diagonalstrebe 24 zusammensetzt. Die besagten Streben sind bevorzugt aus Leichtmetallprofilen hergestellt und über Schraub- Schweiß- und/oder Nietverbindungen fest miteinander verbunden.

In dem Tragrahmen 19 sind zwei Batteriepakete 25 mit einer Vielzahl von Lithium-lonen-Zellen (nicht dargestellt) integriert. Diese sind, wie aus Fig. 3 ersichtlich ist, mit einem dazwischen liegenden Abstand übereinander angeordnet und mit den Längs-, Quer- und Vertikalstreben 20, 21 und 23 derart verschraubt, dass sie tragende Elemente mit dem Tragrahmen 19 bilden. Die Höhe der Batteriepakete 25 und der vertikale Abstand betragen etwa je ein Drittel der gesamten Tragrahmenhöhe.

Auf der dem Längsträger 8 (im Einbauzustand) zugewandten Seite des Tragrahmens 19 und im Bereich des in Fig. 3 ersichtlichen freien Abstandes zwischen den Batteriepaketen 25 ist eine nach innen abragende Haltekonsole 26 aus mehreren Streben (ohne Bezugszeichen) ausgebildet, die einen Wechselrichter 27 mit integriertem Gleichstromwandler 28 (Fig. 4) trägt, die in nicht dargestellter Weise mit zumindest einer Anschlussschnittstelle zum elektrischen Anschluss an das Bordnetz des Nutzfahrzeugs 1 und durch entsprechende, elektrische Leitungen mit den Batteriepaketen 25 verschaltet sind.

Das Antriebsmodul 3 (Fig. 4) weist ein autarkes Flüssigkeitskühlsystem auf. Das Flüssigkeitskühlsystem besteht im Wesentlichen aus Kühlmittelführungen (nicht ersichtlich) in den Batteriepaketen 25 und um den Wechselrichter 27 mit Gleichstromwandler 28 herum. Außerdem ist das Flüssigkeitskühlsystem über diverse Kühlmittelleitungen mit zwei Kühlern 30 als Luft-Wasser-Wärmetauschern, einer elektrisch angetriebenen Förderpumpe 31 und einem Kühlmittel-Ausgleichsbehälter 32 verbunden. Gegebenenfalls kann hinter den Kühlern 30 zwischen den Batteriepaketen 25 auch ein elektrisches Gebläse zur Kühlluftförderung durch die Kühler 30 integriert sein.

Die Förderpumpe 31 betreibt bei entsprechender Ansteuerung den Kühlmittelkreislauf und fördert das Kühlmittel (zum Beispiel eine Wasser-Glykol-Mischung) über eine Saugleitung 34 aus den beiden Kühlern 30 in die Druckleitung 33. Ausgehend von der Druckleitung 33 wird das Kühlmittel unter Durchströmung der elektrischen Geräte, etwa Batterie oder Wechselrichter, im Kreislauf umgewälzt. An der Saugleitung 34 ist der geodätisch oben liegende Ausgleichsbehälter 32 über eine Stichleitung 36 angeschlossen.

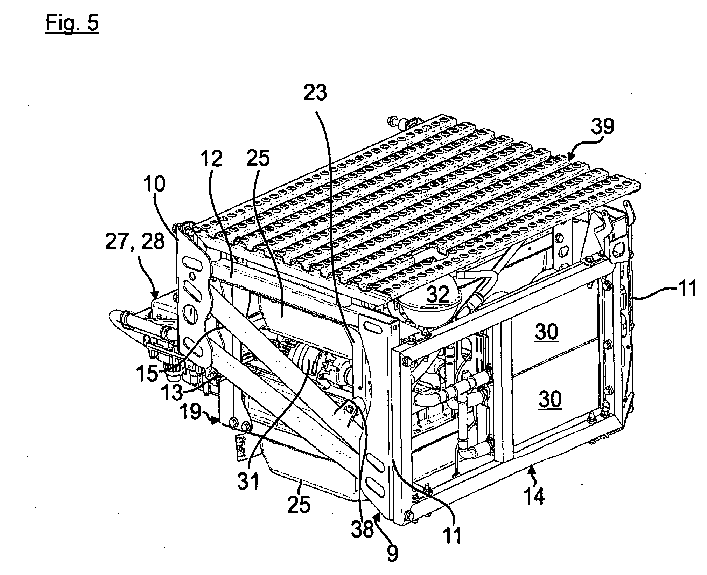

Die beiden Kühler 30 sind wie die Fig. 4 und 5 zeigen an der im Einbauzustand des Antriebsmoduls (Fig. 5) außen liegenden Seite des Fahrzeugs 1 und hinter dem als Auffahrschutz dienenden Längsrahmen 14 des tragenden Stützrahmens 9 positioniert. Es versteht sich, dass an dem Tragrahmen 19 des Antriebsmoduls 3 diverse Befestigungslaschen, etc. vorgesehen sind, die zum Beispiel zur Befestigung der Förderpumpe 31, des Ausgleichsbehälters 32, etc. dienen und der Einfachheit halber nicht weiter beschrieben sind.

Das Antriebsmodul 3 wird als Vormontageinheit hergestellt. Es werden die Batteriepakete 25, die elektrischen Wandler 27, 28, das komplette Kühlsystem mit den diversen Kühlmittelleitungen, Kühlern 30, Förderpumpe 31, Ausgleichsbehälter 32, etc. eingebaut, mit Kühlmittel befüllt und entlüftet. Nach dieser Vormontage wird das Antriebsmodul 3 vollständig auf elektrische und thermische Funktionsfähigkeit und Ladungszustand der Batteriepakete 25 und auf Dichtheit des Kühlsystems überprüft.

Nach Abschluss dieser Überprüfungen außerhalb des Fahrzeugs 1 wird das Antriebsmodul 3 mit dem Tragrahmen 19 in den am Fahrzeug 1 befestigten Stützrahmen 9 von oben eingehängt.

Dazu weisen die oberen Längsstreben 20 (vergleiche Fig. 3 und 4) verlängerte, über die Kontur des Tragrahmens 19 hinausstehende Abschnitte 20a auf, die unter

Zwischenschaltung gummielastischer Puffer bzw. Lager 37 in einer Vierpunktlagerung (siehe auch Fig. 2) auf die Querholme 12 des Stützrahmens aufgesetzt und über Schraubverbindungen befestigt sind.

Zusätzlich können auch noch seitliche, gummielastische Stützlager 38 (Fig. 5) zwischen den tiefer liegenden Querholmen 15 oder 13 des Stützrahmens 9 und den Vertikalstreben 23 des Tragrahmens 19 vorgesehen sein. Nach dem Einhängen bzw. der Montage des Antriebsmoduls 3 wird dieses über die Anschlussschnittstelle in nicht dargestellter Weise elektrisch an das Bordnetz des Fahrzeugs 1 angeschlossen und ist betriebsbereit.

Oberhalb des Tragrahmens 19 des Antriebsmoduls ist in nicht näher dargestellter Weise eine profiliert großflächige Arbeitsbühne 39 befestigt, die als Trittfläche und/oder als Auflage für Funktionsteile im Betrieb des Nutzfahrzeugs 1 dient und die zugleich als weiter aussteifende, schützende Abdeckung für das Antriebsmodul 3 wirkt.

**BEZUGSZEICHENLISTE**

| | |
|---|---|
| 1 Zugmaschine | 36 Stichleitung |
| 1a Führerhaus | 37, 38 gummielastische Lager |
| 2 Sattelplatte | 39 Arbeitsbühne |
| 3 Antriebsmodul | |
| 4 Aufbau | |
| 5 Vorderachse | |
| 6 Hinterachse | |
| 7, 8 Längsträger | |
| 9 Stützrahmen | |
| 10, 11 Seitenwangen | |
| 12, 13 Querholme | |
| 14 Längsrahmen | |
| 15 Querholm | |
| 16 Längsholme | |
| 17 Vertikalholme | |
| 18 Knotenbleche | |
| 19 Tragrahmen | |
| 20, 21 Längsstreben | |
| 20a verlängerte Abschnitte | |
| 23 Vertikalstreben | |
| 24 Diagonalstrebe | |
| 25 Batteriepakete | |
| 26 Haltekonsole | |
| 27 Wechselrichter | |
| 28 Gleichstromwandler | |
| 30 Kühler | |
| 31 Förderpumpe | |
| 32 Ausgleichsbehälter | |
| 33 Druckleitung | |
| 34 Saugleitung | |
| 35 Rücklaufleitungen | |

## Patentansprüche

1. Elektrisches Antriebsmodul (3) für ein Fahrzeug (1), insbesondere Nutzfahrzeug, mit Elektro- oder Hybridantrieb, mit zumindest einem über einen Wechselrichter (27) aufladbaren Batteriepaket (25), einem das Batteriepaket (25) aufnehmenden Tragrahmen (19) und mit einer Kühleinrichtung zum Temperieren der elektrischen Bauteile, wobei das Antriebsmodul (3) als autarke Einheit mit dem Batteriepaket (25), den elektrischen Wandlern, wie Wechselrichter (27) und Gleichstromwandler (28), zumindest einer elektrischen Anschlussschnittstelle und einem Kühlsystem mit zumindest einem Wärmetauscher (30), Kühlmittelleitungen (33, 34, 35, 36) und einer Förderpumpe (31) in dem Tragrahmen (19) angeordnet ist, und wobei der Tragrahmen (19) am Aufbau (4) des Fahrzeugs (1) angebracht ist, **dadurch gekennzeichnet, dass** der Tragrahmen (19) unter Zwischenschaltung gummielastischer Lager (37, 38) am Aufbau (4) angebracht ist.

2. Antriebsmodul (3) nach Anspruch 1, **dadurch gekennzeichnet, dass** das Kühlsystem ein Flüssigkeitskühlsystem mit zumindest einem Luft-Wasser-Wärmetauscher (30) und einem geodätisch hoch liegendem Kühlmittel-Ausgleichsbehälter (32) ist, die an dem Tragrahmen (19) befestigt sind.

3. Antriebsmodul (3) nach einem der vorhergehenden Ansprüche, **dadurch gekennzeichnet, dass** der Tragrahmen (19) käfigartig aus Längs-, Quer- und Vertikalstreben (20, 21, 23) zusammengesetzt ist, an die zumindest ein Batteriepaket (25), der zumindest eine Wärmetauscher (30), die Kühlmittelleitungen (33, 34, 35, 36), der Ausgleichsbehälter (32), die Förderpumpe (31) und der Wechselrichter (27) und zumindest eine Anschlussschnittstelle angebaut sind.

4. Antriebsmodul (3) nach einem der vorhergehenden Ansprüche, **dadurch gekennzeichnet, dass** bei einem Nutzfahrzeug (1) der Tragrahmen (19) an einen der Längsträger (8) des Aufbaus (4) des Nutzfahrzeugs (1) seitlich zwischen einer Vorderachse (5) und einer Hinterachse (6) anbaubar ist.

5. Antriebsmodul (3) nach Anspruch 4, **dadurch gekennzeichnet, dass** an den Längsträger (8) ein Stützrahmen (9) anbaubar ist, in den der Tragrahmen (19) des Antriebsmoduls (3) einsetzbar ist.

6. Antriebsmodul (3) nach Anspruch 5, **dadurch gekennzeichnet, dass** der Stützrahmen (9) im Querschnitt U-förmige Seitenwangen (10, 11) aufweist, die über mehrere Querholme (12, 13, 15) miteinander fest verbunden sind und die durch Längsholme (16) zu einer zum Längsträger (8) hin und nach oben/unten hin offenen Rahmenstruktur verbunden sind, wobei insbesondere die dem Längsträger (8) unmittelbar benachbarten Seitenwangen (10) am Längsträger (8) befestigbar sind und der Tragrahmen (19) von oben in den Stützrahmen (9) einsetzbar ist.

7. Antriebsmodul (3) nach Anspruch 6, **dadurch gekennzeichnet, dass** zwischen einem oberen und einem unteren Querholm (12, 13) des Stützrahmens (9) jeweils ein diagonal vom Längsträger (8) nach außen und nach unten geneigter Querholm (15) an den Seitenwangen (10, 11) befestigt ist.

8. Antriebsmodul (3) nach einem der Ansprüche 6 oder 7, **dadurch gekennzeichnet, dass** die Längsholme (16) des Stützrahmens (9) mit mehreren Vertikalholmen (17) zu einem biegesteifen Längsrahmen (14) zusammengesetzt sind, der in Verbindung mit den Querholmen (12, 13, 15) als seitlicher Auffahrschutz für das innerhalb des Stützrahmens (9) befindliche Antriebsmodul (3) mit Tragrahmen (19) dient.

9. Antriebsmodul (3) nach einem der vorhergehenden Ansprüche, **dadurch gekennzeichnet, dass** zwei Batteriepakete (25) im Tragrahmen (19) angeordnet sind, die insbesondere übereinander liegen, wobei dazwischen ein Abstand ausgebildet ist, in dem zumindest die Förderpumpe (31), Kühlmittelleitungen (33, 34, 35, 36), elektrische Leitungen positioniert sind.

10. Antriebsmodul (3) nach Anspruch 9, **dadurch gekennzeichnet, dass** die beiden Batteriepakete (25) zumindest mit den Vertikalstreben (23) des Tragrahmens (19) fest verbunden sind und die Rahmenstruktur mit verstärken.

11. Antriebsmodul (3) nach einem der vorhergehenden Ansprüche, **dadurch gekennzeichnet, dass** an dem Tragrahmen (19) eine etwa zwischen den Batteriepaketen (25) angeordnete, nach innen dem Längsträger (8) zu ragende Haltekonsole (26) vorgesehen ist, die die elektrischen Wandler (27, 28) und gegebenenfalls die Anschlussschnittstelle trägt.

12. Antriebsmodul (3) nach einem oder mehreren der vorhergehenden Ansprüche, **dadurch gekennzeichnet, dass** der zumindest eine Wärmetauscher (30) des Kühlsystems, insbesondere Kühler (30), seitlich außen vom Längsträger (8) des Aufbaus (4) entfernt am Tragrahmen (19) anbringbar ist und hinter dem als Auffahrschutz dienendem Längsrahmen (14) positionierbar ist.

13. Antriebsmodul (3) nach einem oder mehreren der vorhergehenden Ansprüche, **dadurch gekennzeichnet, dass** bei zwei verwendeten Batteriepaketen (25) je Batteriepaket (25) ein Kühler (30) vorgesehen ist, die über Zuführleitungen (34) und Rücklaufleitungen (35) strömungstechnisch getrennt in das Kühlmittelsystem mit der Förderpumpe (31) eingeschaltet sind.

14. Antriebsmodul (3) nach einem oder mehreren der vorhergehenden Ansprüche, **dadurch gekennzeichnet, dass** die oberen Längsstreben (20) des Tragrahmens (19) über vorstehende Abschnitte (20a) unter Zwischenschaltung gummielastischer Lager (37) an den oberen Querholmen (12) des Stützrahmens (9) aufgehängt sind.

15. Antriebsmodul (3) nach einem oder mehreren der vorhergehenden Ansprüche, **dadurch gekennzeichnet, dass** der als Auffahrschutz dienende Längsrahmen (14) des Stützrahmens (9) über zusätzlich befestigte, obere und untere Knotenbleche (18) ecksteif mit den Querholmen (12, 13) verbunden ist.

16. Antriebsmodul (3) nach einem oder mehreren der vorhergehenden Ansprüche, **dadurch gekennzeichnet, dass** an den oberen Längsstreben (20) des Tragrahmens (19) und/oder am Längsträger (8) des Aufbaus (4) eine Trittflächen aufweisende und/oder Funktionsteile aufnehmende Arbeitsbühne (39) befestigbar ist, die den Tragrahmen (19) überdeckt.

17. Fahrzeug (1), insbesondere Nutzfahrzeug, umfassend ein Antriebsmodul (3) nach einem der vorhergehenden Ansprüche.

## Claims

1. Electric drive module (3) for a vehicle (1), in particular utility vehicle, having an electric drive or hybrid drive, having at least one battery pack (25) which can be charged via a power inverter (27), one supporting frame (19) which accommodates the battery pack (25) and having a cooling device for controlling the temperature of the electrical components, wherein the drive module (3) as an autonomous unit with the battery pack (25), the electrical converters such as the power inverter (27) and direct current converter (28), at least one electrical connection interface and a cooling system with at least one heat exchanger (30), coolant lines (33, 34, 35, 36) and a delivery pump (31), is arranged in the supporting frame (19), and wherein the supporting frame (19) is attached to the body (4) of the vehicle (1), **characterized in that** the supporting frame (19) is attached to the body (4) with an intermediate connection of rubber-elastic bearings (37, 38).

2. Drive module (3) according to Claim 1, **characterized in that** the cooling system is a liquid cooling system with at least one air/water heat exchanger (30) and a geodetically high coolant equalizing container (32) which are fastened to the supporting frame (19).

3. Drive module (3) according to one of the preceding claims, **characterized in that** the supporting frame (19) is composed in a cage-like manner of longitudinal, transverse and vertical struts (20, 21, 23), on which at least one battery pack (25), the at least one heat exchanger (30), the coolant lines (33, 34. 35, 36), the equalizing container (32), the delivery pump (31) and the power inverter (27) and at least one connection interface are mounted.

4. Drive module (3) according to one of the preceding claims, **characterized in that** in the case of a utility vehicle (1) the supporting frame (19) can be mounted on one of the longitudinal members (8) of the body (4) of the utility vehicle (1), laterally between a front axle (5) and a rear axle (6).

5. Drive module (3) according to Claim 4, **characterized in that** a mounting frame (9) can be mounted on the longitudinal member (8), into which mounting frame (9) the supporting frame (19) of the drive module (3) can be inserted.

6. Drive module (3) according to Claim 5, **characterized in that** the mounting frame (9) has, in cross section, U-shaped side pieces (10, 11) which are permanently connected to one another via a plurality of transverse struts (12, 13, 15) and which are connected by longitudinal struts (16) to form a frame structure which is open towards the longitudinal member (8) and in the upward/downward directions, wherein, in particular, the side pieces (10) which are directly adjacent to the longitudinal member (8) can be fastened to the longitudinal member (8), and the supporting frame (19) can be inserted into the mounting frame (9) from above.

7. Drive module (3) according to Claim 6, **characterized in that** in each case a transverse strut (15) which is inclined diagonally outward and downward from the longitudinal member (8) is fastened to the side pieces (10, 11) between an upper and a lower transverse strut (12, 13) of the mounting frame (9).

8. Drive module (3) according to one of Claims 6 or 7, **characterized in that** the longitudinal struts (16) of the mounting frame (9) are assembled with a plurality of vertical struts (17) to form a flexurally rigid longitudinal frame (14) which serves, in conjunction with the transverse struts (12, 13, 15), as a side impact protection for the drive module (3), located within the mounting frame (9), with the supporting frame (19).

9. Drive module (3) according to one of the preceding claims, **characterized in that** two battery packs (25) are arranged in the supporting frame (19) and lie, in particular, one on top of the other, wherein a distance in which at least the delivery pump (31), coolant lines (33, 34, 35, 36) and electrical lines are positioned is formed between said battery packs (25).

10. Drive module (3) according to Claim 9, **characterized in that** the two battery packs (25) are permanently connected at least to the vertical struts (23) of the supporting frame (19) and also reinforce the frame structure.

11. Drive module (3) according to one of the preceding claims, **characterized in that** a securing bracket (26) which is arranged approximately between the battery packs (25), projects inward towards the longitudinal member (8) and supports the electrical converters (27, 28) and, if appropriate, the connection interface, is provided on the supporting frame (19).

12. Drive module (3) according to one or more of the preceding claims, **characterized in that** the at least one heat exchanger (30) of the cooling system, in particular radiator (30), can be attached to the supporting frame (19) laterally on the outside at a distance from the longitudinal member (8) of the body (4) and can be positioned behind the longitudinal frame (14) which serves as a rear-end collision protection.

13. Drive module (3) according to one or more of the preceding claims, **characterized in that** when two battery packs (25) are used, a radiator (30) is provided per battery pack (25) which radiators (30) are connected fluidically separately into the coolant system with the delivery pump (31) via feed lines (34) and return lines (34).

14. Drive module (3) according to one or more of the preceding claims, **characterized in that** the upper longitudinal struts (20) of the supporting frame (19) are suspended from the upper transverse struts (12) of the mounting frame (9) by means of protruding sections (20a) with the intermediate connection of rubber-elastic bearings (37).

15. Drive module (3) according to one or more of the preceding claims, **characterized in that** the longitudinal frame (14), serving as a rear-end collision protection, of the mounting frame (9) is connected rigidly at the corners to the transverse struts (12, 13) by means of additionally fastened upper and lower bracing plates (18).

16. Drive module (3) according to one or more of the preceding claims, **characterized in that** a working platform (39), which has tread surfaces and/or accommodates functional parts, can be fastened to the upper longitudinal struts (20) of the supporting frame (19) and/or on the longitudinal member (8) of the body (4) and covers the supporting frame (19).

17. Vehicle (1), in particular utility vehicle, comprising a drive module (3) according to one of the preceding claims.

## Revendications

1. Module d'entraînement électrique (3) pour un véhicule (1), en particulier un véhicule utilitaire, comprenant un entraînement électrique ou hybride, comprenant au moins une batterie d'accumulateurs (25) pouvant être chargée par le biais d'un onduleur (27), un cadre porteur (19) recevant la batterie d'accumulateurs (25) et un dispositif de refroidissement pour réguler la température des composants électriques, le module d'entraînement (3) étant disposé en tant qu'unité autarcique dans le cadre porteur (19) avec la batterie d'accumulateurs (25), les convertisseurs électriques, tels que l'onduleur (27) et le convertisseur de courant continu (28), au moins une interface de raccordement électrique et un système de refroidissement avec au moins un échangeur de chaleur (30), des conduites de réfrigérant (33, 34, 35, 36) et une pompe de refoulement (31), et le cadre porteur (19) étant monté sur la caisse (4) du véhicule (1), **caractérisé en ce que** le cadre porteur (19) est monté sur la caisse (4) en interposant des paliers ayant l'élasticité du caoutchouc (37, 38).

2. Module d'entraînement (3) selon la revendication 1, **caractérisé en ce que** le système de refroidissement est un système de refroidissement à liquide avec au moins un échangeur de chaleur air-eau (30) et un réservoir d'expansion de réfrigérant (32) situé en hauteur du point de vue géodésique, lesquels sont fixés sur le cadre porteur (19).

3. Module d'entraînement (3) selon l'une quelconque des revendications précédentes, **caractérisé en ce que** le cadre porteur (19) est constitué à la manière d'une cage avec des montants longitudinaux, transversaux et verticaux (20, 21, 23), sur lesquels sont rapportés au moins une batterie d'accumulateurs (25), l'au moins un échangeur de chaleur (30), les conduites de réfrigérant (33, 34, 35, 36), le réservoir d'expansion (32), la pompe de refoulement (31) et l'onduleur (27) ainsi qu'au moins une interface de raccordement.

4. Module d'entraînement (3) selon l'une quelconque des revendications précédentes, **caractérisé en ce que** dans un véhicule utilitaire (1), le cadre porteur (19) peut être rapporté latéralement entre un essieu avant (5) et un essieu arrière (6) sur l'un des supports longitudinaux (8) de la caisse (4) du véhicule utilitaire (1).

5. Module d'entraînement (3) selon la revendication 4, **caractérisé en ce qu'**un cadre de support (9) peut être rapporté sur les supports longitudinaux (8), dans lequel cadre de support peut être inséré le cadre porteur (19) du module d'entraînement (3).

6. Module d'entraînement (3) selon la revendication 5, **caractérisé en ce que** le cadre de support (9) présente en section transversale des parois latérales en forme de U (10, 11) qui sont connectées fixement l'une à l'autre par le biais de plusieurs traverses (12, 13, 15) et qui sont connectées par des longerons (16) à une structure de cadre ouverte vers le support longitudinal (8) et vers le haut/bas, les parois latérales (10) immédiatement adjacentes au support longitudinal (8) pouvant être fixées sur le support longitudinal (8) et le cadre porteur (19) pouvant être inséré par le haut dans le cadre de support (9).

7. Module d'entraînement (3) selon la revendication 6, **caractérisé en ce qu'**entre une traverse supérieure et une traverse inférieure (12, 13) du cadre de support (9), une traverse (15) inclinée vers l'extérieur et vers le bas en diagonale depuis le support longitudinal (8) est à chaque fois fixée sur les parois latérales (10, 11).

8. Module d'entraînement (3) selon l'une quelconque des revendications 6 ou 7, **caractérisé en ce que** les longerons (16) du cadre de support (9) sont assemblés à plusieurs longerons verticaux (17) pour former un cadre longitudinal rigide en flexion (14) qui, en association avec les traverses (12, 13, 15), sert de protection latérale contre les collisions pour le module d'entraînement (3) avec le cadre porteur (19) se trouvant à l'intérieur du cadre de support (9).

9. Module d'entraînement (3) selon l'une quelconque des revendications précédentes, **caractérisé en ce que** deux batteries d'accumulateurs (25) sont disposées dans le cadre porteur (19), lesquelles sont notamment disposées l'une au-dessus de l'autre, un espace étant réalisé entre elles, dans lequel sont positionnées au moins la pompe de refoulement (31), les conduites de réfrigérant (33, 34, 35, 36), et des conduites électriques.

10. Module d'entraînement (3) selon la revendication 9, **caractérisé en ce que** les deux batteries d'accumulateurs (25) sont connectées fixement au moins aux montants verticaux (23) du cadre porteur (19) et aident à renforcer la structure de cadre.

11. Module d'entraînement (3) selon l'une quelconque des revendications précédentes, **caractérisé en ce qu'**il est prévu sur le cadre porteur (19) une console de fixation (26) disposée approximativement entre les batteries d'accumulateurs (25), pénétrant vers l'intérieur vers le support longitudinal (8), laquelle porte les convertisseurs électriques (27, 28) et éventuellement l'interface de raccordement.

12. Module d'entraînement (3) selon l'une quelconque ou plusieurs des revendications précédentes, **caractérisé en ce que** l'au moins un échangeur de chaleur (30) du système de refroidissement, en particulier le radiateur (30), peut être monté sur le cadre porteur (19) de manière espacée latéralement à l'extérieur du support longitudinal (8) de la caisse (4) et peut être positionné derrière le cadre longitudinal (14) servant de protection contre les collisions.

13. Module d'entraînement (3) selon l'une quelconque ou plusieurs des revendications précédentes, **caractérisé en ce que**, si l'on utilise deux batteries d'accumulateurs (25), un radiateur (30) est prévu pour chaque batterie d'accumulateurs (25), lesquels radiateurs sont incorporés dans le système de réfrigérant avec la pompe de refoulement (31) de manière séparée fluidiquement par le biais de conduites d'alimentation (34) et de conduites de retour (35).

14. Module d'entraînement (3) selon l'une quelconque ou plusieurs des revendications précédentes, **caractérisé en ce que** les montants longitudinaux supérieurs (20) du cadre porteur (19) sont accrochés par le biais de sections saillantes (20a) aux traverses supérieures (12) du cadre de support (9) en interposant des paliers ayant l'élasticité du caoutchouc (37).

15. Module d'entraînement (3) selon l'une quelconque ou plusieurs des revendications précédentes, **caractérisé en ce que** le cadre longitudinal (14) du cadre de support (9) servant de protection contre les collisions est connecté aux traverses (12, 13), de manière rigide aux coins, par le biais de tôles de jonction supérieure et inférieure (18) fixées séparément.

16. Module d'entraînement (3) selon l'une quelconque ou plusieurs des revendications précédentes, **caractérisé en ce qu'**une plate-forme de travail (39) présentant des surfaces de marche et/ou recevant des pièces fonctionnelles peut être fixée sur les montants longitudinaux supérieurs (20) du cadre porteur (19) et/ou sur le support longitudinal (8) de la caisse (4), laquelle plate-forme de travail recouvre le cadre porteur (19).

17. Véhicule (1), en particulier véhicule utilitaire, comprenant un module d'entraînement (3) selon l'une quelconque des revendications précédentes.
